# EUROPÄISCHE PATENTSCHRIFT

(11) **EP 1 971 080 B1**
(45) Veröffentlichungstag und Bekanntmachung des Hinweises auf die Patenterteilung: **26.08.2015**
(21) Anmeldenummer: 08005026.3
(22) Anmeldetag: 11.03.2008
(51) Int. Cl.: H04L 12/28

(54) **Verfahren zur Inbetriebnahme eines Funksystems**
Method for operating a radio system
Procédé de mise en service d'un système radio

(30) Priorität: 13.03.2007 DE 102007012085
(43) Veröffentlichungstag der Anmeldung: 17.09.2008
(73) Patentinhaber: Merten GmbH, 51674 Wiehl (DE)
(72) Erfinder: Frielingsdorf, Dirk, 51674 Wiehl (DE); Köhler, Andreas, 51105 Köln (DE); Hüschemenger, Andreas, 51545 Waldbröl (DE)

(56) Entgegenhaltungen:
- EP-A- 1 447 946
- WO-A-97/29560
- US-B1- 6 901 439

## Beschreibung

Die Erfindung betrifft ein Verfahren zur Inbetriebnahme eines Funksystems nach dem Oberbegriff des Patentanspruches 1.

Aus dem Stand der Technik sind verschiedene Systeme bekannt, mit denen in Gebäuden Signale zwischen entsprechenden Teilnehmern, wie Sensoren und Aktoren, übertragen werden, um Schaltaktionen ausführen zu können. Bevorzugt werden dabei Systeme eingesetzt, die zur Signalübertragung einen sogenannten Bus nutzen. Dabei wird zwischen drahtgebundenen und drahtlosen Busmedien unterschieden, wobei unter anderem auch die Übertragung mittels Funksignalen üblich ist.

Allgemein bekannte Systeme dienen der Nachrüstung bestehender Hausinstallationen mit zusätzlichen Funktionen ohne Verlegung zusätzlicher Leitungen. Dabei werden in der Regel elektrische Geräte unter Zwischenschaltung eines per Funk gesteuerten Empfängers über einen entsprechenden Funksender fernbedient. Insbesondere ist es bekannt, mehrere Bedienfunktionen in einer Fernbedienung zusammenzufassen und/oder vorhandene Schalter durch Geräte zu ersetzen oder zu ergänzen, die mit entsprechenden Funkkomponenten ausgestattet sind.

Es gibt kleinere Systeme, die autark agieren und mit denen sich komfortabel Wechsel- und Kreuzschaltungen realisieren lassen. Dabei können mehrere solcher Netzwerke parallel existieren. In einer Ausbaustufe lassen sich parallele Netzwerke verbinden, so dass von einer zentralen Stelle verschiedene Funktionen netzübergreifend geschaltet werden können, wobei vorzugsweise transportable Fernbedienungen verwendet werden, mittels derer die Netzwerke installiert und bedient werden. In der höchsten Ausbaustufe wird die zentrale Funktion von einem beispielsweise in der Wand montierten Gerät übernommen, mit dem komplexe Systeme gesteuert werden und in dem zahlreiche Zusatzfunktionen integriert sind, wie z. B. Menüsteuerungen, Visualisierungen und Multimedia-Anwendungen.

Das Dokument WO97/29560 offenbart eine Master-Steuereinheit mit mindestens einem Aktor und einer Statusanzeige. Die Master-Steuereinheit weist außerdem einen Sender / Empfänger zum Senden von HF-Daten auf, um den Status einer elektrischen Steuervorrichtung zu steuern, und zum Empfangen der Statusinformationen von der elektrischen Steuervorrichtung. Die Master-Steuereinheit zeigt den Status der elektrischen Steuervorrichtung an.

Ein drahtloses Funksystem ist unter anderem in der DE 601 08 946 T2 beschrieben. Dieses System weist verteilt angeordnete Teilnehmer auf, die jeweils drahtlos miteinander kommunizieren können. Da die Reichweite der Funksignale durch die technischen und baulichen Gegebenheiten begrenzt wird, wirken alle Teilnehmer als Empfänger und Sender, so dass gesendete Signale über benachbarte Teilnehmer bis zum Ziel weitergeleitet werden (Routing). Erfolgreiche Signalübertragungen und erfolgte Schaltaktionen werden mittels Quittierungssignalen bestätigt und gegebenenfalls angezeigt.

Solche Systeme weisen Sensoren auf, deren Status vordefiniert ist, so dass eine freie Zuordnung einer Verwalterfunktion zu einem bestimmten Tastertyp oder Montageort nicht möglich ist. Darüber hinaus wird der Aufbau eines Funknetzwerkes durch aufwändige Methodiken zur Aufnahme von Teilnehmern erschwert, die von einem Nutzer Kenntnisse über verschiedene Programmierschritte und die Funktion einzelner Geräte erfordert.

Die Aufgabe der vorliegenden Erfindung besteht deshalb darin, die vorstehend genannten Nachteile zu beseitigen und ein Verfahren zur Inbetriebnahme eines Funksystems zu schaffen, dessen Teilnehmer bedienerfreundlich und einfach zu einem Netzwerk verbunden werden können.

Gelöst wird diese Aufgabe durch die im Patentanspruch 1 angegebenen Merkmale. Vorteilhafte Ausgestaltungen ergeben sich aus den Unteransprüchen.

Die Erfindung gemäß dem Patentanspruch 1 weist den Vorteil auf, dass der Aufbau eines Funksystems bzw. die Integration von Teilnehmern weitestgehend durch Automatismen erfolgt, so dass der Anwender vor Ort keine detaillierten Programmier- oder Produktkenntnisse benötigt, um das Funksystem zu installieren.

Die Aufnahme von Teilnehmern in das Netzwerk erfolgt nach Aktivierung eines Programmiermodus vollkommen selbständig und ohne weitere Bedienaktionen. Wesentlich ist dabei, dass nach Aktivierung des Programmiermodus eine Statusabfrage erfolgt, bei der der Status des Teilnehmers automatisch ermittelt wird. Hierbei wird unterschieden zwischen einem undefinierten neu in das Netzwerk aufzunehmenden Teilnehmer, einem bereits im Netzwerk befindlichen Systemverwalter und einem bereits im Netzwerk befindlichen abhängigen Teilnehmer.

Diese selektive Abfrage ermöglicht einen vereinfachten statusabhängigen Lernmodus. Der Anwender muss den Teilnehmern weder Rechte/Hierarchien zuweisen noch bedarf es der Programmierung bestimmter Funktionalitäten. Das System ermöglicht eine automatische Integration von Teilnehmern, eine automatische Adressvergabe während der Installation und eine automatische Übertragung der Verbindungsdaten vom System verwaltenden Teilnehmer zum aufzunehmenden Teilnehmer. Diese systemgeführten Automatismen sichern eine einfache Installation, Erweiterung und Verwaltung des Funksystems.

Abschließend wird in der Regel eine Bestätigungsmeldung abgegeben. Optional werden die Zustände des Anlernprozesses dem Benutzer durch optische Anzeigen unterstützend signalisiert.

Dem ersten in das System aufgenommenen Sensor wird automatisch die Funktion des Systemverwalters zugewiesen. Ausschließlich über diesen Systemverwalter werden alle anderen Teilnehmer in das Netzwerk aufgenommen. Jedes Netzwerk hat eine eigene Kennung, um Beeinflussungen mit benachbarten Netzwerken zu verhindern.

Alle Sensoren haben im Auslieferungszustand einen undefinierten Status, so dass hier auch produktionstechnisch Vorteile entstehen. Diese freie Definierbarkeit ermöglicht die freie Wahl der Verwalterposition unabhängig vom Sensortyp und vom Montageort. Unterschiedlichste Tasterausführungen können mit der Verwalterfunktion belegt werden. Aktoren sind im Auslieferungszustand funktional als abhängige Teilnehmer vordefiniert. Die gerätespezifische Funktion des Aktors wird bei der Aufnahme ins Netzwerk automatisch dem zugewiesenen Sensor übermittelt, so dass dort auch automatisch die bedienspezifischen Parameter definiert werden (Häufigkeit, Länge).

Des weiteren ist neben der programmatischen Integration von Teilnehmern auch das manuelle Handling weitestgehend vereinfacht und reduziert worden. Das Funksystem zeichnet sich insbesondere dadurch aus, dass das Integrieren der Teilnehmer in das Netzwerk systemübergreifend durch eine einheitliche Bedienmethodik erfolgt. An allen Teilnehmern werden die gleichen Aktionen durchgeführt. Vorteilhaft ist hierbei, dass keine Rastschalter oder schwer zugängliche oder bedienbare Einstellmechanismen bzw. Werkzeuge notwendig sind. Es ist lediglich die frontseitige Bedienung durch die Tasten der Teilnehmer oder Berühren eines Sensorfeldes notwendig.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Figur 1:: ein Ablaufdiagramm einschließlich einer Statusabfrage zur Aufnahme eines Teilnehmers in ein Funksystem.
- Figur 2:: schematisch das Anlernen eines Teilnehmers in das Funksystem.
- Figur 3:: schematisch das Anlernen eines weiteren Teilnehmers in das Funksystem.

Gleiche oder gleichwirkende Bauteile sind in der nachfolgenden Beschreibung mit gleichen Bezugszeichen versehen.

Bei den Teilnehmern für ein Funksystem wird unterschieden zwischen Sensoren und Aktoren. Ein Sensor ist beispielsweise ein elektrischer Taster, Schalter oder Fernbedienung und ein Aktor ist ein Betätigungselement, das auf ein elektrisches Signal hin eine Funktion veranlasst, wie beispielsweise das Einschalten eines elektrischen Gerätes, Ventil oder dergleichen. Zu den Aktoren zählen beispielsweise Zwischenstecker, Elektromagnete, Garagentorantriebe, Rolladenantriebe oder Haushaltsmaschinen.

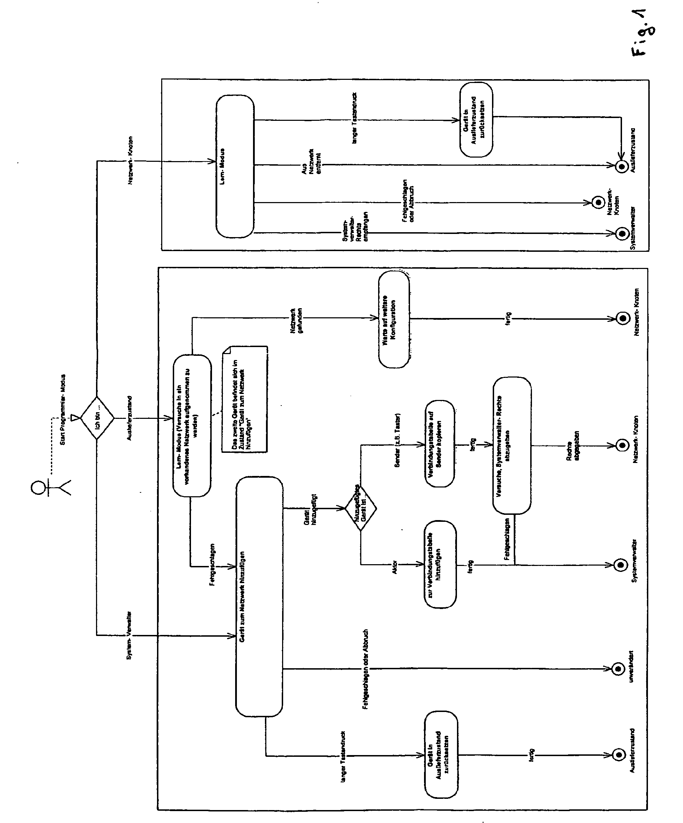

In Figur 1 ist das allgemeingültige Ablaufdiagramm für das Aufnehmen von Teilnehmern in ein Funksystem dargestellt. Dabei kennzeichnet der Begriff Teilnehmer alle im Netzwerk befindlichen Geräte, sowohl Sensoren als auch Aktoren. Es erfolgt weder eine funktionelle Unterscheidung zwischen Sensor und Aktor noch eine hierarchische Unterscheidung in Systemverwalter und abhängigem Netzwerk-Knoten.

Die Aufnahme eines Teilnehmers in das Funknetzwerk gliedert sich in mehrere Abschnitte, nämlich Aktivieren, Statusabfrage, Anlernen und Bestätigen, wobei anfangs zwischen drei möglichen Zuständen eines Teilnehmers mittels Statusabfrage unterschieden wird. Die Statusabfrage wird mit einer einheitlichen Bedienmethodik aktiviert, vorzugsweise mittels dreimaligem Drücken des Tasters bzw. einer Sensorfläche des entsprechenden Teilnehmers. Teilnehmer können den Status undefiniert neutral, definiert als Systemverwalter oder definiert als Netzwerk-Knoten aufweisen. Systemverwalter steht dabei für den Teilnehmer, der in dem Funknetz die Verwalterfunktion hat bzw. bekommt. Als Netzwerk-Knoten wird jeder weitere Teilnehmer bezeichnet, wobei ein Sensor anfangs als neutral definiert ist, während Aktoren funktionsbedingt vordefiniert sind. Abhängig von dem jeweiligen Zustand ergeben sich die folgenden Automatismen.

Nachdem bei einem undefinierter Sensor der Programmiermodus aktiviert wird, wird der Status als undefiniert erkannt und anschließend der Lernmodus begonnen, wobei anfangs unterschieden wird, ob der Sensor als Systemverwalter oder abhängiger Netzwerk-Knoten in das Netzwerk aufgenommen werden kann. Diese Selektion erfolgt mittels einer Wartezeit, in der geprüft wird, ob ein Aufnahmesignal eines anderen Gerätes, nämlich eines vorhandenen Systemverwalters, empfangen wird. Die Wartezeit wird anhand eines blinkenden Anzeigemittels, vorzugsweise einer LED, des Teilnehmers signalisiert. Ist dies nicht der Fall, wartet der Teilnehmer auf ein Signal eines hinzuzufügenden Teilnehmers und wird durch die Anbindung dieses Teilnehmers zum Systemverwalter eines neuen Netzwerkes bestimmt. Anderenfalls geht er in seinen Ursprungszustand zurück. Im Erfolgsfall wird intern eine Netzwerkadresse vergeben und dem Teilnehmer eine Knotenadresse zugewiesen. Die LED geht dabei in ein zeitlich begrenztes Dauerleuchten über. Abhängig von der Art des hinzuzufügenden Teilnehmers werden bei einem Aktor die Verbindungsdaten in einer Verbindungstabelle des Systemverwalters erstellt, während bei einem Sender die bisherige Verbindungstabelle kopiert wird.

Wird dagegen bei der Aufnahme eines undefinierten Teilnehmers nach der Statusabfrage ein Aufnahmesignal eines schon vorhandenen Systemverwalters empfangen, erfolgt die Anbindung an diesen Systemverwalter, wobei wie oben schon beschrieben die Knotenadresse zugewiesen und Verbindungsdaten ausgetauscht werden. Die rote LED erlischt und eine grüne LED bestätigt kurzzeitig die erfolgreiche Aufnahme des Teilnehmers als abhängiger Netzwerk-Knoten.

Ein bereits als Systemverwalter bestimmter Sensor wird in der Statusabfrage entsprechend erkannt und in den Aufnahmezustand gesetzt, in dem er das Signal eines aufzunehmenden Teilnehmers empfangen kann. Beim Empfang eines derartigen Signals wird dem Teilnehmer gemäß obiger Beschreibung eine Knotenadresse zugewiesen und des weiteren die Verbindungsdaten gespeichert. Erfolgt dagegen keine Aktion, fällt der Systemverwalter in seinen Status zurück.

Ein im Netzwerk befindlicher abhängiger Knoten kann nach der Aktivierung der Statusabfrage in einem Lernmodus aus dem Netzwerk entfernt werden, in dem ein langer Tastendruck erfolgt. Des weiteren besteht die Möglichkeit die Funktion des Systemverwalters an einen vorhandenen Knoten zu übertragen, vorzugsweise um einen anderen vorteilhaften Bedienort zu wählen oder eine höherwertige zentrale Bedieneinheit zu integrieren. Dabei werden sämtliche Verbindungsdaten übertragen. Der Systemverwalter verliert seinen Status und wird zum abhängigen Netzwerk-Knoten.

Nachfolgend wird anhand eines konkreten Beispiels die Inbetriebnahme einer kleinen Installation erklärt, wobei davon ausgegangen wird, dass die Geräte sich in ihrem neutralen Ursprungszustand befinden, der nach Entnahme aus der Verpackung besteht.

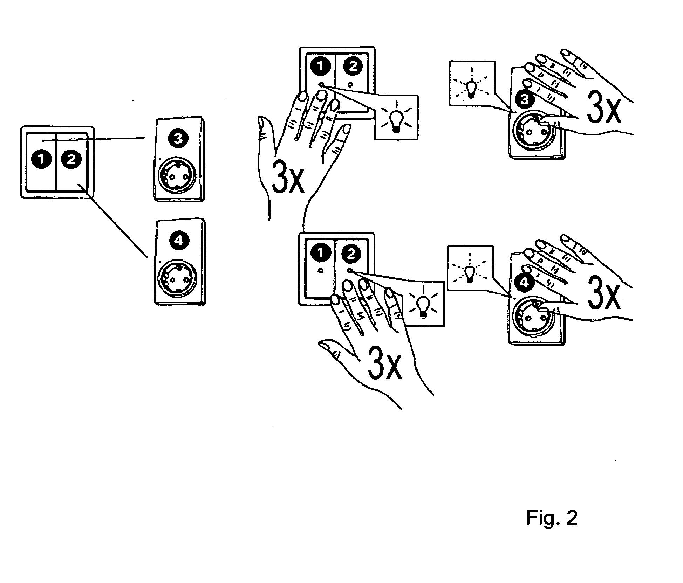

Die Installation zeigt in der Figur 2 einen Serientaster, dessen Tasten 1 und 2 jeweils mit einem anderen Zwischenstecker 3 und 4 kommunizieren und daran angeschlossene Geräte ein- und ausschalten können.

Zuerst wird dabei die Taste 1 dreimal innerhalb von ca. 1,5 Sekunden betätigt, so dass der Programmiermodus aktiviert wird und die Statusabfrage erfolgt. Konkret wird hierbei festgestellt, dass der Serientaster noch undefiniert ist und sich keine anderen Teilnehmer im System befinden. Folglich versucht er ein neues Netzwerk zu bilden und wird durch die nachfolgende Aufnahme eines Teilnehmers zum Systemverwalter definiert. Eine in der Tastfläche befindliche LED signalisiert diese Aktion durch kurzzeitiges Blinken. Anschließend geht die LED für ca. 1 Minute in Dauerleuchten über. Innerhalb dieser Zeit ist die Empfangsbereitschaft für die Aufnahme von Teilnehmern hergestellt, so dass der Zwischenstecker 3 angelernt werden kann. Er wird ebenfalls mittels dreimaligem Drücken innerhalb von ca. 1,5 Sekunden in den Programmiermodus gesetzt und automatisch als abhängiger Netzwerk-Knoten gesetzt und funktional dem Taster zugewiesen, indem eine Knotenadresse gesendet wird. An dem angelernten Zwischenstecker 3 wird der erfolgreiche Lernvorgang über die grüne LED und die Aktivierung des angeschlossenen Verbrauchers bestätigt. Die zweite Taste 2 des Serientasters wird analog dazu dem zweiten Zwischenstecker 4 zugewiesen.

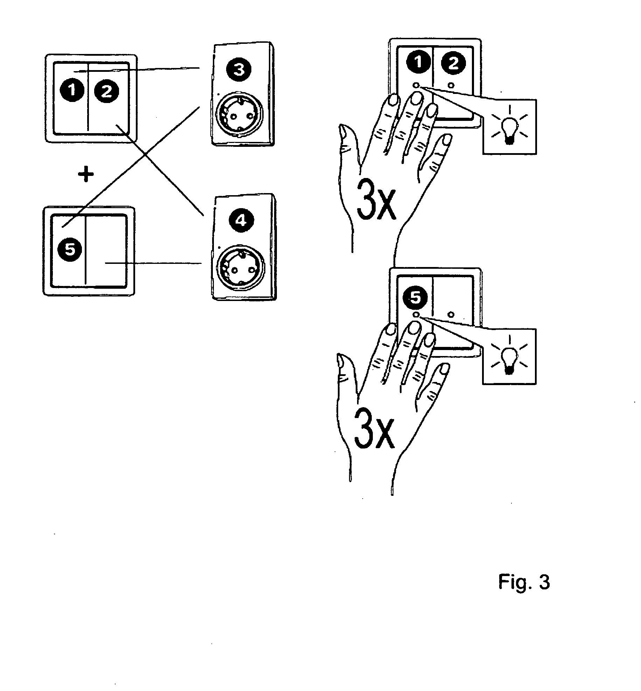

In der Figur 3 ist ausgehend von der vorgeschilderten Installation die zusätzliche Aufnahme einer Taste 5 für den Zwischenstecker 3 beschrieben. Hierzu wird die Taste 1 des Serientasters wieder dreimal innerhalb von 1,5 Sekunden betätigt. Es erfolgt wieder die Statusabfrage und Feststellung, dass ein Systemverwalter vorliegt, der folglich nur weitere Teilnehmer aufnehmen kann oder gelöscht werden kann. Hierzu geht die LED im Taster 1 wieder für 1 Minute auf Dauerleuchten, wobei der Taster 5 angelernt werden kann. Der Taster 5 wird mittels dreimaligem Drücken innerhalb von 1,5 Sekunden aktiviert, der Status als undefiniert erkannt und folgend ermittelt, dass bereits ein Systemverwalter existiert. Folglich wird ein Signal zur Aufnahme in ein Netzwerk gesendet. Der Systemverwalter empfängt dieses Signal und weist der Taste 5 eine Knotenadresse zu und sendet die Verbindungsdaten, damit der Taster 5 auch den Zwischenstecker 3 schaltet kann. Der Programmiervorgang ist damit abgeschlossen. Die Bestätigung des erfolgreichen Programmierens erfolgt über die grüne LED des Tasters 5. Somit kann der Zwischenstecker 3 über den Taster 1 und den Taster 5 geschaltet werden.

Deutlich erkennbar ist hierdurch, dass die Bedienmethodik immer gleich bleibt, wobei dreimaliges Betätigen reicht, damit die Teilnehmer automatisch ihren Status finden und ihre Position und Funktion im Netzwerk zugewiesen bekommen.

Die vorstehende Beschreibung des Ausführungsbeispieles dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Taster
- 2: Taster
- 3: Zwischenstecker
- 4: Zwischenstecker
- 5: Taster

## Patentansprüche

1. Verfahren zur Inbetriebnahme eines Funksystems für die Hausleittechnik bestehend aus verschiedenen Teilnehmern, insbesondere Sensoren und Aktoren, die mit je einem Sender und einem Empfänger zur bidirektionalen Signalübertragung ausgestattet sind, wobei ein Sensor als übergeordneter Systemverwalter fungiert und weitere Sensoren untergeordnet sind und wobei die Teilnehmer durch einen Programmiermodus in das Funksystem aufnehmbar sind, **dadurch gekennzeichnet, dass** nach Aktivierung des Programmiermodus eines Teilnehmers automatisch dessen Status ermittelt wird, wobei zwischen undefiniert, Systemverwalter oder abhängiger Netzwerk-Knoten unterschieden wird, und automatisch die Integration der Teilnehmer durch Zuweisung von Adressen und Austausch von Verbindungsdaten mit dem Systemverwalter erfolgt.

2. Verfahren zur Inbetriebnahme eines Funksystems nach Patentanspruch 1, **dadurch gekennzeichnet, dass** im Programmiermodus automatisch ein statusabhängiger Lernmodus gestartet wird.

3. Verfahren zur Inbetriebnahme eines Funksystems nach einem der vorhergehenden Patentansprüche, **dadurch gekennzeichnet, dass** undefinierten Teilnehmern bei der Aufnahme in das Funksystem automatisch der Status zugewiesen wird.

4. Verfahren zur Inbetriebnahme eines Funksystems nach einem der vorhergehenden Patentansprüche, **dadurch gekennzeichnet, dass** der erste in das System aufgenommene Sensor automatisch als Systemverwalter definiert wird.

5. Verfahren zur Inbetriebnahme eines Funksystems nach einem der vorhergehenden Patentansprüche, **dadurch gekennzeichnet, dass** jeder weitere aufzunehmende Teilnehmer automatisch als abhängiger Netzwerk-Knoten definiert wird.

6. Verfahren zur Inbetriebnahme eines Funksystems nach einem der vorhergehenden Patentansprüche, **dadurch gekennzeichnet, dass** jeder weitere Sensor ausschließlich über den Systemverwalter in das System integrierbar ist.

7. Verfahren für die Inbetriebnahme eines Funksystems nach einem der vorhergehenden Patentansprüche, **dadurch gekennzeichnet, dass** ein undefinierter Teilnehmer zunächst nach einem vorhandenen Netzwerk sucht und auf ein Aufnahmesignal wartet, und beim Nichtempfang als Systemverwalter definiert wird, während er beim Empfang eines Aufnahmesignals als abhängiger Netzwerk-Knoten definiert wird.

8. Verfahren für die Inbetriebnahme eines Funksystems nach einem der vorhergehenden Patentansprüche, **dadurch gekennzeichnet, dass** ein Systemvervvalter nach Aktivierung des Programmiermodus einem aufzunehmenden Teilnehmer eine Knotenadresse zuweist und ein Verbindungsprotokoll aussendet, wodurch der aufzunehmende Teilnehmer als abhängiger Netzwerk-Knoten definiert wird.

9. Verfahren für die Inbetriebnahme eines Funksystems nach einem der vorhergehenden Patentansprüche, **dadurch gekennzeichnet, dass** eine falsche oder fehlende Eingabe während des Programmiermodus keine Veränderung des Status auslöst.

10. Verfahren für die Inbetriebnahme eines Funksystems nach einem der vorhergehenden Patentansprüche, **dadurch gekennzeichnet, dass** eine andauernde Betätigung eines Teilnehmers im Programmiermodus eine Rücksetzung in den undefinierten Zustand bewirkt.

11. Verfahren zur Inbetriebnahme eines Funksystems nach einem der vorhergehenden Patentansprüche, **dadurch gekennzeichnet, dass** einer von mehreren funktional gleichen Sensoren beliebig als Systemverwalter bestimmbar ist.

12. Verfahren zur Inbetriebnahme eines Funksystems nach einem der vorhergehenden Patentansprüche, **dadurch gekennzeichnet, dass** die Aufnahme eines Teilnehmers in das Funksystem ausschließlich durch Aktivierung des Programmiermodus erfolgt, wobei an dem Teilnehmer eine einheitliche Bedienmethodik erforderlich ist.

13. Verfahren zur Inbetriebnahme eines Funksystems nach einem der vorhergehenden Patentansprüche, **dadurch gekennzeichnet, dass** für alle Teilnehmer eine einheitliche Bedienmethodik zur Aufnahme in das und zum Entfernen aus dem Funksystem gilt.

14. Verfahren zur Inbetriebnahme eines Funksystems nach einem der vorhergehenden Patentansprüche, **dadurch gekennzeichnet, dass** die Aktivierung des Programmiermodus ohne bistabile mechanische Bauelemente erfolgt.

15. Verfahren zur Inbetriebnahme eines Funksystems nach einem der vorhergehenden Patentansprüche, **dadurch gekennzeichnet, dass** die Aktivierung des Programmiermodus durch die Berührung von Sensorflächen erfolgt.

## Claims

1. Method for activating a radio system for building services control engineering, consisting of different subscribers, in particular sensors and actuators, each equipped with a transmitter and a receiver for bidirectional signal transmission, one sensor acting as a superordinate system administrator and further sensors being subordinate, and the subscribers being able to be incorporated in the radio system by means of a programming mode, **characterized in that**, after the programming mode of a subscriber has been activated, its status is automatically determined, a distinction being made between an undefined system administrator and a dependent network node, and the subscribers being automatically integrated by allocating addresses and interchanging connection data with the system administrator.

2. Method for activating a radio system according to Patent Claim 1, **characterized in that** a statusdependent learning mode is automatically started in the programming mode.

3. Method for activating a radio system according to one of the preceding patent claims, **characterized in that** the status is automatically allocated to undefined subscribers during incorporation in the radio system.

4. Method for activating a radio system according to one of the preceding patent claims, **characterized in that** the first sensor incorporated in the system is automatically defined as the system administrator.

5. Method for activating a radio system according to one of the preceding patent claims, **characterized in that** each further subscriber to be incorporated is automatically defined as a dependent network node.

6. Method for activating a radio system according to one of the preceding patent claims, **characterized in that** each further sensor can be integrated in the system solely via the system administrator.

7. Method for activating a radio system according to one of the preceding patent claims, **characterized in that** an undefined subscriber first of all looks for an available network and waits for an incorporation signal and is defined as the system administrator if said signal is not received, whereas it is defined as a dependent network node if an incorporation signal is received.

8. Method for activating a radio system according to one of the preceding patent claims, **characterized in that** a system administrator allocates a node address to a subscriber to be incorporated after the programming mode has been activated and emits a connection protocol, as a result of which the subscriber to be incorporated is defined as a dependent network node.

9. Method for activating a radio system according to one of the preceding patent claims, **characterized in that** an incorrect or missing input during the programming mode does not trigger any change in the status.

10. Method for activating a radio system according to one of the preceding patent claims, **characterized in that** continuous actuation of a subscriber in the programming mode causes a reset to the undefined state.

11. Method for activating a radio system according to one of the preceding patent claims, **characterized in that** one of a plurality of functionally identical sensors can be determined as the system administrator in an arbitrary manner.

12. Method for activating a radio system according to one of the preceding patent claims, **characterized in that** a subscriber is incorporated in the radio system solely by activating the programming mode, in which case a consistent operating methodology is required in the subscriber.

13. Method for activating a radio system according to one of the preceding patent claims, **characterized in that** a consistent operating methodology for incorporation in the radio system and removal from the radio system applies to all subscribers.

14. Method for activating a radio system according to one of the preceding patent claims, **characterized in that** the programming mode is activated without any bistable mechanical components.

15. Method for activating a radio system according to one of the preceding patent claims, **characterized in that** the programming mode is activated by touching sensor surfaces.

## Revendications

1. Procédé de mise en service d'un système radioélectrique pour la technique de commande domestique composé de différents terminaux, notamment des capteurs et des actionneurs, qui sont chacun équipés d'un émetteur et d'un récepteur pour la transmission de signal bidirectionnelle, un capteur faisant office de gestionnaire de système superviseur auquel sont subordonnés d'autres capteurs et les terminaux pouvant être pris en charge dans le système radioélectrique par le biais d'un mode de programmation, **caractérisé en ce que** l'état d'un terminal est déterminé automatiquement après l'activation d'un mode de programmation de celui-ci, la différence étant faite entre indéfini, gestionnaire de système ou noeud de réseau dépendant, et l'intégration des terminaux s'effectue automatiquement par affectation d'adresses et par échange de données de connexion avec le gestionnaire de système.

2. Procédé de mise en service d'un système radioélectrique selon la revendication 1, **caractérisé en ce qu'**un mode d'assimilation dépendant de l'état est démarré automatiquement en mode de programmation.

3. Procédé de mise en service d'un système radioélectrique selon l'une des revendications précédentes, **caractérisé en ce que** les terminaux indéfinis se voient automatiquement affecter cet état lors de la prise en charge dans le système radioélectrique.

4. Procédé de mise en service d'un système radioélectrique selon l'une des revendications précédentes, **caractérisé en ce que** le premier capteur pris en charge dans le système est automatiquement défini comme gestionnaire de système.

5. Procédé de mise en service d'un système radioélectrique selon l'une des revendications précédentes, **caractérisé en ce que** chaque terminal supplémentaire à prendre en charge est automatiquement défini comme noeud de réseau dépendant.

6. Procédé de mise en service d'un système radioélectrique selon l'une des revendications précédentes, **caractérisé en ce que** chaque capteur supplémentaire peut être intégré dans le système exclusivement par le biais du gestionnaire de système.

7. Procédé de mise en service d'un système radioélectrique selon l'une des revendications précédentes, **caractérisé en ce qu'**un terminal indéfini recherche tout d'abord un réseau présent et attend un signal de prise en charge et, en l'absence de réception, est défini en tant que gestionnaire de système alors qu'en cas de réception d'un signal de prise en charge, il est défini en tant que noeud de réseau dépendant.

8. Procédé de mise en service d'un système radioélectrique selon l'une des revendications précédentes, **caractérisé en ce qu'**un gestionnaire de système, après l'activation du mode de programmation, affecte une adresse de noeud à un terminal à prendre en charge et envoie un protocole de connexion, suite à quoi le terminal à prendre en charge est défini en tant que noeud de réseau dépendant.

9. Procédé de mise en service d'un système radioélectrique selon l'une des revendications précédentes, **caractérisé en ce qu'**une saisie erronée ou manquante pendant le mode de programmation n'entraîne pas de modification de l'état.

10. Procédé de mise en service d'un système radioélectrique selon l'une des revendications précédentes, **caractérisé en ce qu'**un actionnement prolongé d'un terminal en mode de programmation provoque un retour à l'état indéfini.

11. Procédé de mise en service d'un système radioélectrique selon l'une des revendications précédentes, **caractérisé en ce qu'**un capteur parmi plusieurs capteurs fonctionnellement identiques peut être défini en tant qu'administrateur du système.

12. Procédé de mise en service d'un système radioélectrique selon l'une des revendications précédentes, **caractérisé en ce que** la prise en charge d'un terminal dans le système radioélectrique s'effectue exclusivement en activant le mode de programmation, une procédure opérationnelle uniforme étant nécessaire sur le terminal.

13. Procédé de mise en service d'un système radioélectrique selon l'une des revendications précédentes, **caractérisé en ce qu'**une procédure opérationnelle uniforme de prise en charge dans le système radioélectrique et de retrait de celui-ci s'applique pour tous les terminaux.

14. Procédé de mise en service d'un système radioélectrique selon l'une des revendications précédentes, **caractérisé en ce que** l'activation du mode de programmation s'effectue sans composants mécaniques bistables.

15. Procédé de mise en service d'un système radioélectrique selon l'une des revendications précédentes, **caractérisé en ce que** l'activation du mode de programmation s'effectue en effleurant des surfaces de détection.
